(19) **Europäisches Patentamt**
European Patent Office
Office européen des brevets

(11) **EP 1 472 643 B1**

(12) **EUROPÄISCHE PATENTSCHRIFT**

(45) Veröffentlichungstag und Bekanntmachung des Hinweises auf die Patenterteilung:
**21.09.2011 Patentblatt 2011/38**

(21) Anmeldenummer: **03706457.3**

(22) Anmeldetag: **07.02.2003**

(51) Int Cl.:
*G06K 7/10* (2006.01)   *G02B 7/182* (2006.01)
*H04N 9/31* (2006.01)   *G02B 26/10* (2006.01)
*H04N 1/053* (2006.01)   *G01D 5/30* (2006.01)

(86) Internationale Anmeldenummer:
**PCT/EP2003/001242**

(87) Internationale Veröffentlichungsnummer:
**WO 2003/067509 (14.08.2003 Gazette 2003/33)**

(54) **ANORDNUNG UND VERFAHREN ZUR MESSUNG AN EINEM RESONANTEN SCHWINGER UND SEINER STEUERUNG UND EINSTELLUNG EINER PIXELBREITE**

ARRANGEMENT AND METHOD FOR MEASUREMENT ON A RESONANT OSCILLATOR, CONTROL THEREOF AND SETTING OF A PIXEL WIDTH

ENSEMBLE ET PROCEDE DE MESURE SUR UN OSCILLATEUR RESONANT, COMMANDE DE CE DERNIER ET REGLAGE D'UNE LARGEUR DE PIXELS

(84) Benannte Vertragsstaaten:
**DE FR GB IT SE**

(30) Priorität: **08.02.2002 DE 10205207**

(43) Veröffentlichungstag der Anmeldung:
**03.11.2004 Patentblatt 2004/45**

(73) Patentinhaber: **Jenoptik Ldt GmbH**
**07548 Gera (DE)**

(72) Erfinder: **WENZEL, Mike**
**07548 Gera (DE)**

(74) Vertreter: **Geyer, Fehners & Partner**
**Patentanwälte**
**Perhamerstrasse 31**
**80687 München (DE)**

(56) Entgegenhaltungen:
**EP-A- 0 214 863     DE-A- 2 657 723**
**DE-A- 10 002 196     US-A- 5 347 124**

EP 1 472 643 B1

**Beschreibung**

Die Erfindung betrifft eine Anordnung gemäß dem Oberbegriff des Anspruchs 1 und ein Verfahren zum Resonanzscannen.

Als resonanter Schwinger wird im Zusammenhang mit dieser Erfindung zum Einen eine in Drehschwingungen versetzbare, an Torsionsbändem aufgehängte Platte verstanden. Zum Anderen ist ein in Drehschwingungen versetzbarer, einseitig eingespannter Torsionsstab ebenfalls ein resonanter Schwinger. Als schwingendes Funktionsteil wird insbesondere ein Spiegel eingesetzt; der zur Lichtbündelablenkung dient. Werden resonante Schwinger zur Ablenkung eines Lichtbündels eingesetzt, bezeichnet man diese auch als Schwingspiegel oder Resonanzscanner. Resonante Schwinger werden darüber hinaus auch als empfindliche Messwertaufnehmer eingesetzt. Auch für dieses Anwendungsgebiet ist die Erfindung vorgesehen.

In Reich, Stan: "The use of Elektro-Mechanical Mirror Scanning Devises" SPIE Vol. 86 Laser Scanning Components & Techniques (1976) S. 47 - 58 werden Scanner beschrieben, die eine feste Schwingfrequenz haben. Weiterhin werden interne und externe Messwertaufnehmer im Überblick vorgestellt.

Ein resonanter Schwinger hat eine mechanische Eigenresonanz mit der dieser bei einer geeigneten Anregung schwingt.

Zweckmäßigerweise wird ein Antrieb des resonanten Schwingers mit einer elektronischen Ansteuereinrichtung so verkoppelt, dass ein periodisch wirkende Kraft in oder nahe der Frequenz der mechanischen Eigenresonanz auf den Schwinger einwirkt. Es soll eine vorbestimmte Amplitude der Schwingung erzeugt werden.

Die Erregung des resonanten Schwingers erfolgt in vielen Fälle durch elektromagnetische oder elektrostatische Kräfte. Jedoch gibt es auch Lösungen, die piezoelektrische Kräfte, gas- oder Flüssigkeitsströmungen versenden.

Infolge von Störungen und äußeren Einwirkungen unterliegt die mechanische Eigenresonanz des Resonanzscanners jedoch Schwankungen. Ebenso unterliegt die Amplitude des Resonanzscanners starken Änderungen, wenn sich Betriebs-oder Umgebungsbedingungen ändern.

In Buser, Rudolf, A.: "Theoretical and Experimentat Investigations on Silicon Single Crystal Resonant Structures" Dissertation University of Neuchatel 1989 S. 178 wurden für einen elektrostatisch angetriebenen resonanten Schwinger in einem Zeitraum von 5 Stunden eine Frequenzdrift von 0,7 Hz und ein Änderung des Q-Faktors um 83.000 gemessen.

Ein bedeutendes Anwendungsgebiet resonanter Schwinger ist die Ablenkung eines Lichtstrahles; insbesondere eines Laserlichtstrahles, z.B. für die Bilderzeugung. Zu diesem Zweck ist eine bewegte Fläche des Schwingers für die Wellenlänge des Lichtbündels reflektierend ausgelegt. Zur Bilderzeugung ist eine Intensitätsmodulation dieses Lichtbündels vorgesehen, wobei die Modulation für jeden Bildpunkt mit der augenblicklichen Spiegelstellung synchronisiert wird. Es ist erforderlich, den Zeilenanfang festzulegen und einen Pixeltakt zu generieren.

Die US 5.121.138 A1 beschreibt die Gewinnung eines Pixeltaktes durch eine nicht näher beschriebene Messung der augenblicklichen Geschwindigkeit eines resonant schwingenden Spiegels. Der Pixeltakt entspricht der Pixelbreite und diese ist proportional zur Ablenkgeschwindigkeit der Spiegelfläche. So sollen trotz der ungleichförmigen Bewegung der Spiegelfläche gleiche Pixelbreiten und damit ein gleicher Pixelabstand erreicht werden. Weiterhin wird eine Leistungsmodulation des Lichtbündels vorgeschlagen, wobei die Intensität des Lichtbündels ebenfalls eine Funktion der Geschwindigkeit ist, so dass gleiche Bildinhalte unabhängig von der augenblicklichen Geschwindigkeit des Spiegels gleich hell dargestellt werden sollen.

Die DE 100 02 196 A1 beschreibt eine Methode zur Positionsbestimmung von Drehspiegeln mittels einer optischen Spiegelpositionsbestimmung. Mittels einer Diodenzeile wird die Spiegelposition über eine Auslenkung eines Messstrahls bestimmt. Aus dem Vergleich der Position des Messstrahles auf der Diodenzeile mit einer Sollposition wird ein Regelwert erzeugt, der in einen Regelkreis eingegeben wird, der den Spiegel steuert. Wesentlich ist, dass hier die Winkelposition des Drehspiegels einstellbar ist.

Bei dem hier zum Gegenstand der vorliegenden Erfindung gehörenden resonanten Schwinger ist die Einstellung einer Winkelposition prinzipiell nicht möglich, da seine Bewegung zwingend einer sin-Funktion folgt.

Die optische Messung der Position ist jedoch möglich.

Die WO 98/13719 A1 verwendet zwei piezoelektrische Sensoren, die mit einer resonant schwingenden Spiegelfläche bewegt werden. Die Auswertung der infolge der Torsion durch die Bewegung entstehenden elektrischen Signale wird ausgewertet.

Die DE 197 09 913 C2 verwendet zur Messung der Auslenkung die Änderung elektrischer Eigenschaften in den Torsionsbändem einer mikromechanischen Spiegelanordnung.

Die US 3,609,485, US 3,642,344 und US 4,044,283 verwenden elektromagnetische Detektoren um die Amplitude und Phase der resonanten Schwinger zu bestimmen und um die Amplitude zu regeln.

Weitere Durchschriften, die den Stand der Technik gemäß dem Oberbegriff des Anspruchs 1 offenbaren, sind die EP 0 214 863 A, die US 5.347.124 A und die DE 37 26 500 A.

Die Erfindung hat die Aufgabe, bei einem resonanten Schwinger die Schwingfrequenz, Phasenlage sowie die maximale Amplitude mit einer hohen Genauigkeit zu bestimmen. Insbesondere für die Anwendung des resonanten Schwingers als Resonanzscanner in einem Drucker oder Belichter sowie als resonanter Ablenkspiegel in einem Videoprojektionssystem ist es erforderlich, dass die Resonanzfrequenz in einem möglichst konstanten Verhältnis zur Zeilenfrequenz der Drucker-, Belichter- oder Videonorm steht. Weiterhin soll der zeitliche Verlauf der Auslenkung (Geschwindigkeit und Phase) mit einer hohen Auflösung ermittelt werden sowie im Bedarfsfall eine Reglung der Amplitude erfolgen. Weiterhin soll der Zeilenanfang einer gescannten Zeile pixelgenau bestimmbar sein. Weiterhin soll aus der Messung des Schwingungszustandes der Spiegelfläche ein Signal für einen Pixeltakt und somit zur Einstellung der Pixelbreite ermittelt werden können.

Die Aufgabe wird erfindungsgemäß mit einer Anordnung gemäß Anspruch 1 gelöst.

Die Periode T der Sinus-Schwingung wird hier als bekannt vorausgesetzt und als so hinreichend konstant betrachtet, dass die Genauigkeit des berechneten Ist-Wertes der Amplitude für viele Anwendungen ausreichend ist.

Zur Messung ist ein paralleler Meßstrahl aus der Laserdiode ausreichend. Zur Verbesserung der Messgenauigkeit wir das Laserlicht so gebündelt, dass ein Spot die Detektorfläche der Fotodiode überstreicht.

Es ist im Zusammenhang mit der Erfindung nicht zwingend die Bauelemente Fotodiode und Laserdiode zu verwenden. Vielmehr erfüllen die genannten Bauelemente die mit der Erfindung verbundenen Anforderungen nach dem derzeitigen Stand der Technik am genauesten.

Die Laserdiode kann durch einen anderen Laser oder zum Beispiel durch eine Lumineszenzdiode oder eine andere Lichtquelle ersetzt werden, die ein geeignetes Meßstrahl erzeugt. Die Fotodiode kann durch ein anderes lichtempfindliches Bauelement, z.B. einen Fototransistor oder einen Fotowiderstand ersetzt werden. Wichtig ist hier, dass das lichtempfindliche Bauelement ein genügend genaues und reproduzierbares Signal an die Auswerteelektronik zur Auswertung liefert.

Die erste Spiegelfläche ist vorzugsweise als ebener Spiegel ausgebildet, der für die Wellenlänge des von der Laserdiode ausgesendeten Strahlung hochgradig reflektierend ist.

Mit dem Abstand b der Fotodiode zur Spiegelfläche wird der Ist-Wert der Amplitude nur dann exakt berechnet, wenn die Schwingachse des resonanten Schwingers genau in der Spiegelfläche liegt. Obwohl dies in der Praxis selten der Fall ist und die Spiegelfläche zusätzlich zur Winkelauslenkung eine kleine Drehbewegung auf einem Kreisbogen ausführt, ist es nicht erforderlich, diesen Versatz (habe Dicke des Spiegels) in der Rechnung zu berücksichtigen. Die halbe Dicke (z.B. 30 $\mu$m) der die Spiegelfläche tragenden schwingenden Platte ist im Verhältnis zum Abstand b zur Fotodiode (z.B. 5 cm) sehr klein, so daß der dadurch entstehende Fehler in der Praxis nicht relevant ist. Der Winkel $\gamma$ liegt vorzugsweise im Bereich zwischen 30° und 90°. Ist der Winkel $\gamma$ gleich 90°, ergibt sich ein besonders kompakter Aufbau.

Eine vorteilhafte Weiterbildung der Erfindung besteht darin, daß ein zweiter Fotoempfänger symmetrisch zu dem ersten Fotoempfänger bezogen auf die Strahlachse des Meßstrahls in der von dem reflektierten Meßstrahl aufgespannten Ebene angeordnet ist. Mit dieser Anordnung werden innerhalb einer halben Periode zwei gleichwertige Meßsignale gewonnen, die vorteilhaft zur Berechnung und Justage der Meßanordnung benutzt werden. Dies ist in der Beschreibung zu den Figuren näher erläutert.

Wird der resonante Schwinger als Spiegel zur Ablenkung eines Nutzlichtbündels eingesetzt, hat dieser eine zweite Spiegelfläche, die der ersten Spiegelfläche gegenüberliegend angeordnet ist.

Die Anwendung der Anordnung ist nämlich nicht auf Anwendungen beschränkt, die ein Lichtbündel ablenken. Vielmehr ist das Prinzip der Erfindung allgemein für resonante Schwinger einsetzbar, die z.B. als Schwingungsnormal oder als Meßwertaufnehmer verwendet werden.

Ein weitere vorteilhafte Ausgestaltung der Erfindung besteht darin, daß der einfallende Meßstrahl und der abgelenkte Meßstrahl in einen festen Winkel $\delta$ zu einander stehen, der orthogonal zum Ablenkwinkel $\alpha$ liegt.

Der Winkel $\delta$ ist daher vorzugsweise größer 0° und wird zu $\delta$=arctan h/b berechnet Durch diese Maßnahme wird verhindert, daß ein Rückreflex des abgelenkten Meßstrahls auf die Laserdiode fällt.

Die Erfindung beinhaltet auch die Verwertung des Ist-Wertes der Amplitude zu ihrer Regelung. Dazu ist die Auswerteelektronik mit einer Regeleinrichtung und diese mit einer Antriebseinheit für den resonanten Schwinger verbunden.

Weiter ist vorgesehen, daß die Auswerteelektronik mit einer Videoelektronik, die eine Rechenschaltung und Speicher hat, verbunden ist.

Die Videoelektronik selbst ist mit einer Treiberelektronik und diese ist mit einer modulierbaren Laserlichtquelle verbunden, die das Nutzlichtbündel erzeugt.

Wird die Videoelektronik mit einem Videosignal angesteuert liefert die erfindungsgemäße Anordnung ein synchron zur Spiegelablenkung moduliertes Lichtbündel. Trifft das abgelenkte Nutzlichtbündel auf eine Projektionsfläche wird zeilenweise ein Bild geschrieben.

Die Aufgabe wird erfindungsgemäß mit einem Verfahren erfindungsgemäß dadurch gelöst, daß ein resonanter Schwinger um eine Schwingachse mit einer Periodendauer T ausgelenkt wird, innerhalb jedes Viertels einer Halbwelle bei einer vorbestimmten Auslenkung $\beta_1$ Impulse ermittelt und Zeitpunkte ($t_1$, $t_2$) bestimmte werden, wobei die vorbestimmte Auslenkung außerhalb des Maximums der Schwingung ($n*2\pi+\pi/2$; n = 0, 1, 2, 3,.....) sowie außerhalb des Nulldurchganges der Schwingung ($n*\pi$; n = 0, 1, 2, 3,.....) liegt, aus den Zeitpunkten ($t_1$, $t_2$) der Zeitabschnitt $\Delta t = t_2, -t_1$ innerhalb der einen Halbwelle berechnet wird und der Ist-Wert der Amplitude mit der Gleichung

$$\varphi_{IST} = \frac{2\,\beta_1}{\sin\pi(\frac{1}{2} - \frac{\Delta t}{T})}$$

berechnet wird.

Das Verfahren beruht auf dem Prinzip einer Zeitmessung zwischen mindestens zwei Funktionswerten gleicher oder unterschiedlicher Auslenkung bei einem bekannten funktionellen Verlauf der Auslenkungsbewegung. Wird nur zwischen zwei Funktionswerten gemessen, muß zusätzlich die Periodendauer T gemessen oder berechnet werden oder bekannt sein. Bei symmetrischen Funktionen reicht auch der Wert T/2 aus.

Speziell wird das oben beschriebene Prinzip auf die Amplitudenmessung eines resonant betriebenen Zeilenspiegels für ein Videoprojektionssystem angewendet, indem die Zeitdifferenz $\Delta t$ zwischen mindestens zwei bekannten Punkten gleicher Auslenkung und die Periodendauer T der Schwingung bestimmt werden.

Eine vorteilhafte Weiterbildung des Verfahrens besteht darin, daß die Messungen und die Berechnung in einer folgenden Periode der Schwingung wiederholt werden, sowie die Periode T aus der Zeitdifferenz zweier Zeitpunkte ($t_1$, $t_3$), die in zwei aufeinanderfolgenden Perioden bei der vorbestimmten Auslenkung ($\beta_1$) gemessen werden, mit der Auswerteelektronik zu T= $t_3 - t_1$ berechnet wird.

Die Erfindung betrifft weiterhin die Nutzung des gemessenen Ist-Wertes der Amplitude zur Steuerung oder Regelung der Amplitude. Dazu wird der Ist-Wert der Amplitude einer Regeleinrichtung zur Einstellung eines Soll-Wertes der Amplitude des resonanten Schwingers zugeführt. Die Regeleinrichtung steuert die Antriebseinheit an. Die Reglung der Amplitude kann durch eine Spannungsänderung, eine Stromänderung, durch eine Änderung eines Tastverhältnisses oder durch eine Frequenzänderung erfolgen.

Bei der Anwendung des Verfahrens auf ein Videoprojektionssystem, einen Filmbelichter oder für einen Drucker wird der Winkel $\alpha$ =arctan a/b so bemessen, daß die Zeitdauer $\Delta t$, die errechnet wird, einer Zeilentotzeit beim Schreiben aufeinanderfolgender Zeilen eines Bildes entspricht.

"Entspricht" heißt hier, dass die Zeitdauer gleich der Zeilentotzeit einer Videonorm oder einer anderen Norm ist. Die Zeitdauer $\Delta t$ kann aber auch von einer genormten Totzeit positiv oder negativ abweichen, wenn gewährleistet ist, daß die Zeile in der gewünschten Breite mit allen Bildpunkten dieser Zeile geschrieben wird. Dies erfordert in der Regel den Einsatz eines Speichers für die Videodaten um eingehende Videodaten und ausgehende Videodaten zeitlich zu entkoppeln.

Die Anwendung der Erfindung ist nicht auf die genannten Systeme beschränkt. Vielmehr kann die Erfindung auf andere technische Gebiete Übertragen werden, in denen ein resonanter Schwinger Anwendung findet, so zum Beispiel die Bildaufnahme, Radar, Vermessungstechnik, Meßtechnik.

Bei einer der genannten Anwendungen wird im II. und/oder im IV. Quadranten ein Impuls zu einem Zeitpunkt ($t_2$, $t_4$, $t_6$, .....) innerhalb der Periodizität der Schwingung gewonnen, der den Start des Schreiben des ersten Pixel einer Zeile und des letzten Pixels einer folgenden Zeile zum Beispiel für ein Videobild oder für einen Drucker liefert.

Ausgehend vom bekannten Schwingungsverlauf der aktuell ermittelten Bewegungsfunktion

$$\beta = f(t) = \beta_{max} * \sin(\omega t) = \beta_{max} * \sin(\frac{t_x}{T} * 2\pi)$$

wird der Betrag des Geschwindigkeitsverlaufes zu

$$|v| = f(t) = v_{max} * |\cos(\omega t)| = v_{max} * |\cos(\frac{t_x}{T} * 2\pi)|$$

mit $t_x$ = 0 ....T berechnet. Allgemein ist $t_x$ ein beliebiger Zeitpunkt zwischen 0 und T; $|v_x| = |\cos(\omega t_x)|$ ist die Scann-Geschwindigkeit am Zeitpunkt $t_x$.

Aus dem Geschwindigkeitsverlauf werden in der Praxis eine Steuersignal für die Modulation eines abgelenkten Lichtbündels sowie Werte zur Korrektur des Pixeltaktes bestimmt. Damit wird auch die Pixelbreite gesteuert. Diese Maßnahmen sind erforderlich, um das Bild geometrisch zu korrigieren und eine hohe Bildauflösung sowie gleichmäßig

**EP 1 472 643 B1**

helle Zeilen zu erhalten.

Die Erfindung wird nachfolgend an Hand von Figuren am Beispiel eines Videoprojektionssystems erläutert.

Es zeigen:

Fig. 1: Meßanordnung mit einem Fotoempfänger,

Fig. 2: Bewegungsfunktion des resonanten Schwingers mit Angaben zur Meßanordnung gemäß Fig. 1,

Fig. 3: Meßanordnung mit zwei Fotoempfängern mit einem Winkel $\gamma = 90°$,

Fig. 4: Bewegungsfunktion des resonanten Schwingers mit Angaben zur Meßanordnung gemäß Fig. 3,

Fig. 5: Steuerung des resonanten Schwingers mit einer Meßanordnung gemäß Fig. 3,

Fig. 6: Bewegungsfunktion und Geschwindigkeitsfunktion des resonanten Schwingers mit prinzipieller Darstellung des Pixeltaktes,

Fig. 7: Ansicht einer Anordnung mit einer Laserdiode und zwei Fotoempfängern,

Fig. 8: Seitenansicht einer Anordnung mit einer Laserdiode und zwei Fotoempfängern gemäß Fig. 7,

Fig. 9: Draufsicht einer Anordnung mit einer Laserdiode und zwei Fotoempfängern gemäß Fig. 7,

Fig. 10: Meßanordnung entsprechend der Fig. 3 mit einem Winkel $\gamma = 60°$.

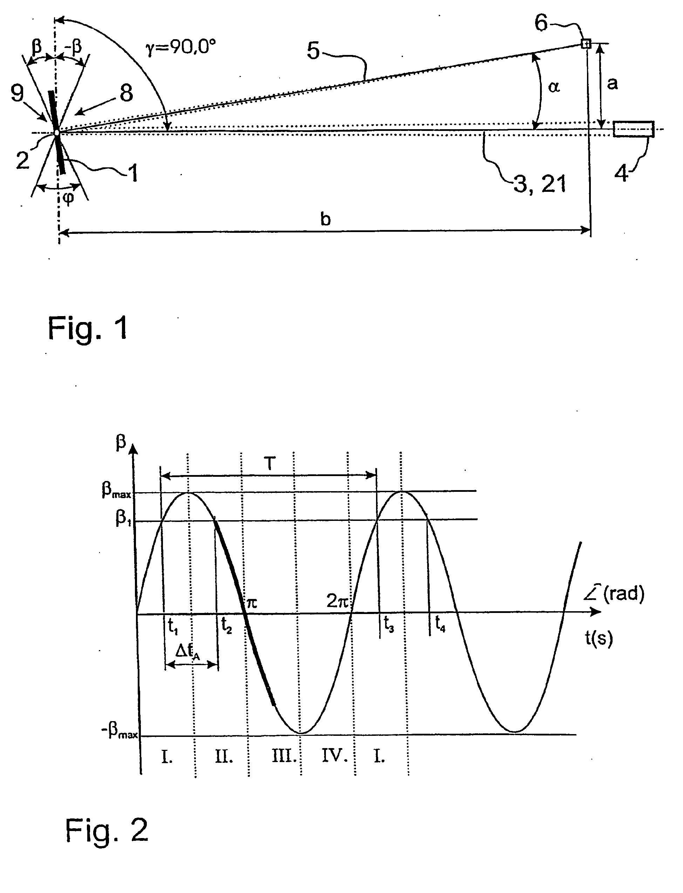

Der resonante Schwinger ist im Beispiel der Fig.1 und der Fig. 2 ein Spiegel 1 mit zwei gegenüberliegenden, parallelen und ebenen Spiegelflächen 8 und 9. Der Spiegel 1 führt eine sin-förmige Schwingung aus. Seine Anregung kann zum Beispiel elektromagnetisch oder elektrostatisch sein. Seine Aufhängung kann zum Beispiel an Spannbändern oder an einem Torsionsstab erfolgen, die eine Schwingachse 2 bilden.

Auf eine erste Spiegelfläche 8 des Spiegels 1 ist ein Messstrahl 3 einer Laserdiode 4 gerichtet. Die Richtung des Messstrahles 3 ist identisch mit einer Flächennormale des Spiegels 1 in seiner Ruhelage, wobei die Flächennormale die Schwingachse 2 des Spiegels 1 schneidet. In der Ebene der Ablenkung des Messstrahles 3 durch den Spiegel 1 ist ein Fotoempfänger 6 in einem Abstand zur Laserdiode 4 angeordnet. Bei einer Auslenkung des Spiegels 1 in seiner Schwingachse 2 um einen Winkel $\beta$ belichtet ein abgelenkter Meßstrahl 5 den Fotoempfänger 6.

In Fig. 1 sind:

b der Abstand Fotoempfänger 6 zum Spiegel 1 in der Schwingachse 2

a Abstand Fotoempfänger 6 zum Messstrahl 3 der Laserdiode 4

$\alpha$ Winkel zwischen Messstrahl 3 der Laserdiode 4 und der Strecke zwischen dem Fotoempfänger 6 und dem Spiegel 1 mit $\alpha = \arctan a/b$

$\gamma$ Winkel zwischen der Ruhelage des Spiegels 1 in der Schwingungsebene und einer Strahlachse 21 des Meßstrahls 3.

Für eine Amplitudenbestimmung ist bei einer bekannter Periodendauer des resonant schwingenden Spiegels 1 nur die Bestimmung zweier Zeiten $t_1$ und $t_2$ erforderlich, die bei gleicher Auslenkung $\beta_1$ des Spiegels innerhalb einer Halbwelle gemessen werden, die zwischen der Amplitude und der Auslenkung "O" (Ruhelage des Spiegels) liegen. Aus diesen Messungen wird $\Delta t_A = t_2 - t_1$ berechnet.

Da die Schwingung solcher resonanter Schwinger symmetrisch zur Ruhelage des Spiegels verläuft, reicht die Bestimmung dieser zwei Werte innerhalb einer Halbwelle aus, um, wie nachfolgend beschrieben jede andere Auslenkung einschließlich der Amplitude zu einem beliebigen Zeitpunkt t zu berechnen. Praktisch ist insbesondere die Kenntnis des Ist-Wertes der Amplitude interessant, da mit diesem Wert eine Regelung eines Soll-Wertes der Amplitude vorgenommen wird.

Die Wahl der Größe der Auslenkung, bei der jeweils gemessen wird, kann zwischen der Ruhelage und der Amplitude liegen, wobei diese beiden Werte und ihre unmittelbare Umgebung für eine Messung nicht zulässig oder nicht geeignet sind.

Praktisch wird die Wahl der Größe der Auslenkung, bei der gemessen wird insbesondere nach einem der nachfolgend genannten Kriterien vorgenommen:

a) Auslenkung, bei der unter Berücksichtigung anderer Randbedingungen ein minimaler Messfehler entsteht oder

b) $\Delta t$ entspricht der Zeilentotzeit einer Videonorm oder

c) Wert, der einen Bereich eingrenzt, bei dem der Linearitätsfehler eine bestimmte Größe nicht überschreitet.

Gemäß der erfindungsgemäßen Vorgehensweise erfolgt eine Messung der Periodendauer T der Schwingung des Spiegels 1 durch zwei aufeinanderfolgende Messungen der Zeitdifferenz $t_3 - t_1 = T$ der gleichen Winkelauslenkung in aufeinanderfolgenden gleichen Quadranten der sin-förmigen Schwingung. Im Beispiel der Figuren 1 und 2 erfolgt die Messung der Werte in aufeinanderfolgenden I. Quadranten der sin-förmigen Schwingung.

Zusätzlich zur Amplitudenmessung und Periodenmessung ist die Anordnung gemäß Fig. 1 weiter dazu bestimmt, den nutzbaren Scannwinkel bei einem resonanten Schwinger festzulegen, der als Zeilenspiegel eingesetzt wird.

5

Zum Beispiel wird der Abstand a in Fig. 1 so dimensioniert, dass am resonanten Schwingspiegel bei einer Auslenkung von 80% der Amplitude gemessen wird ($\beta_1/\beta_{max}$=0,8). Das entspricht einer Zeilenlänge, die in Fig. 2 im I. und im II. Quadranten als verstärkte Linie gezeigt ist. 20% der Amplitude der Schwingung des Spiegels werden nicht genutzt, in diesem Winkelbereich liegt die Totzeit, die dann 41% beträgt; 59% der Zeit wird zum Schreiben der Zeile genutzt. Bei einer Totzeit von 20% ergibt sich ein für das Schreiben der Zeile genutztes Winkelverhältnis $\beta_1/\beta_{max}$=0,951=95,1%.

Es ergeben sich folgende Winkelverhältnisse: Auf Grund der Spiegelschwingung um seine Ruhelage berechnet sich der Auslenkwinkel $\varphi = 2|\beta|$. Während der Spiegel eine Schwingungsperiode T ausführt durchläuft er den Einheitskreis von 0 bis $2\pi$. Die Zeitdifferenz $\Delta t_A = t_2\ t_1$, die bei 80% gemessen wird entspricht der Zeit, die zwischen den beiden Zuständen $\beta_1 = 0,8\ \beta_{max}$ innerhalb einer Halbwelle vergeht, wobei $\beta_{max}$ die Amplitude der Schwingung ist.

Die Zeitdifferenz $\Delta t_A$ ist bezogen auf die Periodendauer T gleich

$$\Delta t_A = \frac{\Delta t_A}{T} T \; .$$

Zweckmäßiger ausgedrückt ist $\Delta t$ bezogen auf den Einheitskreis

$$Z(\Delta t_A) = \frac{\Delta t_A}{T} 2\pi \qquad\qquad (1)$$

mit $Z(\Delta t_A)$ Winkel in rad, der in der Zeitdifferenz $\Delta t_A$ auf dem Einheitskreis zurückgelegt wurde.

Da im Beispiel des resonant schwingenden Spiegels mit einer sin-förmigen Bewegungsfunktion $\Delta t_A$ symmetrisch zu $\pi/2$ liegt gilt

$$Z(t_1) = \frac{\pi}{2} - \frac{1}{2} Z(\Delta t_A) \qquad\qquad (2)$$

(2) in (1) ergibt

$$Z(t_1) = \frac{\pi}{2} - \frac{1}{2} \frac{\Delta t_A}{T} 2\pi$$

$$Z(t_1) = \pi(\frac{1}{2} - \frac{\Delta t_A}{T}) \qquad\qquad (3)$$

analog dazu

$$Z(t_2) = \pi(\frac{1}{2} + \frac{\Delta t_A}{T})$$

mit $Z(t_1)$; $Z(t_2)$; ... Winkel auf dem Einheitskreis an den Zeitpunkten $t_1$; $t_2$; .... in rad. Allgemein: jedem Winkel $Z(t_x)$ auf dem Einheitskreis zum Zeitpunkt $t_x$ ist ein Auslenkwinkel $\beta_x$ zugeordnet. Dem Winkel $Z(t_{1;2;3}....)$ auf dem Einheitskreis wird für die nachfolgende Berechnung der Ablenkwinkel $\beta_1$ zugeordnet.

Im Beispiel, in dem eine 80%ige effektive Zeilenlänge L realisiert wird, ist

$$\beta_1 = L *\beta_{max} \qquad\qquad (4)$$

mit L = 0,8. Das heißt: der Sinus des Winkels $Z(t_1)$ auf dem Einheitskreis zum Zeitpunkt $t_1$ entspricht L und es gilt sin$(Z(t_1)) = L$ und nach (3) ergibt sich

$$\sin(\angle t_1) = \sin \pi(\frac{1}{2} - \frac{\Delta t_A}{T}) = L = 0,80 . \qquad (5)$$

Aus (4) und (5) ergibt sich:

$$\beta_1 = \beta_{max} {}^* \sin \pi(\frac{1}{2} - \frac{\Delta t}{T})$$

umgestellt nach $= \beta_{max}$ ergibt

$$\beta_{max} = \frac{\beta_1}{\sin \pi(\frac{1}{2} - \frac{\Delta t}{T})} \qquad (6)$$

Auf Grundlage der erfindungsgemäßen Messanordnung wird der nutzbare Auslenkwinkel $\beta_1$ auf den feststehenden Winkel a zurückgeführt.

Der Winkel zwischen dem Messstrahl 3 der Laserdiode 4 und der Strecke zwischen der Fotodiode 6 und dem Spiegel 1, auf welcher der reflektierte Messstrahl 5 verläuft, ist infolge der Spiegelauslenkung:

$$\alpha = 2 \beta_1 \text{ oder } \beta_1 = \alpha/2,$$

eingesetzt in (6) ergibt sich

$$\beta_{max} = \frac{\alpha}{2\sin \pi(\frac{1}{2} - \frac{\Delta t}{T})} \quad , \qquad \text{mit } \alpha = \arctan\frac{a}{b}$$

ergibt sich

$$\beta_{max} \frac{\arctan\frac{a}{b}}{2\sin \pi(\frac{1}{2} - \frac{\Delta t}{T})}$$

wobei $\beta_{max}$ die positive Amplitude des resonanten Schwingers (in der positiven Halbwelle) ist.

Die beschriebene Messung und Berechnung gilt für den ersten und den zweiten Quadranten der sin-förmigen Bewegungsfunktion des resonanten Schwingers, der ersten Halbwelle.

Da die erste und die zweite Halbwelle der Bewegungsfunktion des resonanten Schwingers symmetrisch zur Ruhelage des Schwingers liegen gilt

$$|\beta_{max}| = |- \beta_{max}|$$

wobei $- \beta_{max}$ die negative Amplitude des resonannten Schwingers im dritten und vierten Quadranten (in der negativen Halbwelle) ist.

Die Summe der Beträge des maximalen positiven und der negativen Amplitude wird im folgenden als Scannwinkel $\varphi$ bezeichnet:

$$\dot{\varphi} = |\beta_{max}| + |-\beta_{max}| \text{ oder } \dot{\varphi} = 2\,\beta_{max} \text{ oder } \varphi = +/-\,\beta_{max}$$

Damit ergibt sich der berechnete Scannwinkel $\varphi_{IST}$ aus der Messung der Zeitdifferenz $\Delta t_A$, das heißt der Messung von $t_1$ und $t_2$

$$\varphi_{IST} = \frac{\arctan\dfrac{a}{b}}{\sin\pi(\dfrac{1}{2} - \dfrac{\Delta t_A}{T})} = \frac{\arctan\dfrac{a}{b}}{\sin\pi(\dfrac{1}{2} - \dfrac{(t_2 - t_1)}{T})}\,.$$

Ergebnis der vorstehenden Erörterungen ist, dass es zur Amplitudenmessung ausreichend ist

1. den zeitlichen Verlauf f(t) der Bewegungsfunktion zu kennen und damit die Periodendauer sowie
2. die Zeitdifferenz zwischen zwei definierten Messungen gleicher oder unterschiedlicher Auslenkung zu ermitteln.

Bei einer praktischen Anwendung ist es in der Regel erforderlich, dass die Periodendauer T gemessen wird, da diese bei einem resonant betriebenen Spiegel nicht als konstant angesehen werden kann. Zum Beispiel verändern Temperaturschwankungen die Resonanzfrequenz, so daß die Ansteuerungsfrequenz des Spiegels nachgeführt werden muß, um die Amplitude konstant zu halten. Die Periodendauer ergibt sich aus den Messungen der Zeit $t_1$ im I. Quadranten einer Periode und der Zeit $t_3$ im I. Quadranten der folgenden Periode sowie der Berechnung von

$$T = t_3 - t_1\,,$$

wobei $t_3$ der Zeitpunkt mit der Auslenkung $\beta_1$ in der Periode ist, die dem Zeitpunkt $t_1$ folgt.

Jedoch ist es bei der praktischen Ausführung der in Fig. 1 dargestellten Anordnung problematisch, den Winkel $\gamma$ mit exakt 90° einzuhalten. Mit anderen Worten, die Strahlrichtung des Messstrahles 3 muss exakt mit einer Flächennormale in der Ruhelage der Spiegelfläche des resonanten Schwingers übereinstimmen, um zusätzliche Messfehler zu vermeiden.

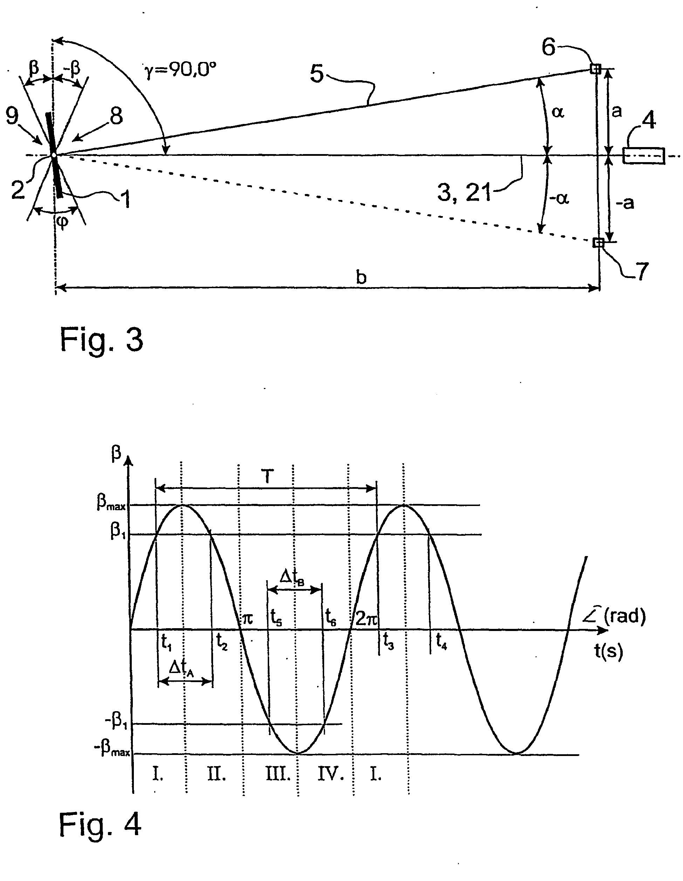

Durch die nachfolgend zu Fig. 3 beschriebene symmetrische Auslegung der Anordnung wird dieses Problem auf einfache Weise gelöst.

**Fig. 3** zeigt eine Messanordnung, bei der beide Halbperioden des resonanten Schwingers zum Ablenken des Messstrahles 3 genutzt werden. Dazu wird die Anordnung gemäß Fig. 1 um einen weiteren, zweiten Fotoempfänger 7 ergänzt, der die negative Halbwelle der resonanten Schwingung erfasst.

Der zweite Fotoempfänger 7 ist ebenfalls im Abstand b zum Spiegel 1, jedoch im Abstand -a zum Messstrahl 3 der Laserdiode 4 angeordnet.

**Fig. 4** zeigt in Analogie zu Fig. 2 eine Darstellung der sin-förmigen Schwingung mit den entsprechenden Meßwerten.

Analog zu der zu Fig.1 und Fig. 2 durchgeführten Herleitung

$$\angle(t_1) = \pi(\frac{1}{2} - \frac{\Delta t_A}{T})$$

ergibt sich

$$\angle(t_s) = \frac{3}{2}\pi - \frac{1}{2}\angle(\Delta t_B)$$

$$\angle(t_s) = \frac{3}{2}\pi - \frac{1}{2}\frac{\Delta t_B}{T}2\pi)$$

$$\bar{Z}(t_5) = \pi\left(\frac{3}{2} - \frac{\Delta t_B}{T}\right) \qquad \text{analog dazu} \qquad \bar{Z}(t_6) = \pi\left(\frac{3}{2} + \frac{\Delta t_B}{T}\right)$$

mit

$Z(\Delta t_B)$ Winkel in rad der in der Zeitdifferenz $\Delta t_B$ auf dem Einheitskreis zurückgelegt wurde.

Auf Grund der Symmetrie von $\Delta t_A$ und $\Delta t_B$ zu $\pi$ und jeder dieser Werte zu $\pi/2$ bzw. zu $3/2^*\pi$ ist es an sich gleichgültig, welcher Winkel $Z(\Delta t_A)$ oder $Z(\Delta t_B)$ zur weiteren Berechnung der Amplitude $\beta_{max}$ bzw. $-\beta_{max}$ herangezogen wird.

In der Praxis wird allerdings so vorgegangen, dass beide Zeitdifferenzen $\Delta t_A$ und $\Delta t_B$ gemessen und ausgewertet werden. Ist eine Gleichheit der Zeitdifferenzen $\Delta t_A$ und $\Delta t_B$ feststellbar, ist dies ein Beieg dafür, dass die Messanordnung, bestehend aus den Fotodioden 6, 7 und der Laserdiode 4 exakt zum Spiegel 1 ausgerichtet ist. Wird eine Differenz zwischen den Ergebnissen der Zeitmessungen $\Delta t_A$ und $\Delta t_B$ innerhalb einer Periode festgestellt, liegt es daran, dass die Messanordnung nicht symmetrisch zu einer Flächennormale des Spiegels in seiner Ruhestellung ausgerichtet ist.

Die Symmetrie ist dann erreicht, wenn die gemessenen Zeitdifferenzen $\Delta t_A$ und $\Delta t_B$ gleich sind.

Eine praktisch erprobte Anordnung, die ein Meßstrahl ablenkt, um eine Zeile zu schreiben, hat folgende Parameter:

Die Amplitude der Schwingung des Spiegels $\beta_{max}$ beträgt 3°, demzufolge ist $\varphi = 6°$. Damit ergibt sich der Zeilenanfang bei $\beta_1 = 2,4°$ und das Zeilenende liegt bei $-\beta_1 = -2,4°$, so daß der effektive nutzbare Scannwinkel bei 4,8° liegt.

Zur Messung werden die Fotodioden in einem Anstand $+/-a = +/-6,00$ mm und in einem Abstand $b = 71,45$ mm angeordnet.

Damit ergibt ist sichergestellt, dass bei einer Auslenkung $\beta_1 = 2,4°$ der Zeilenanfang detektiert wird.

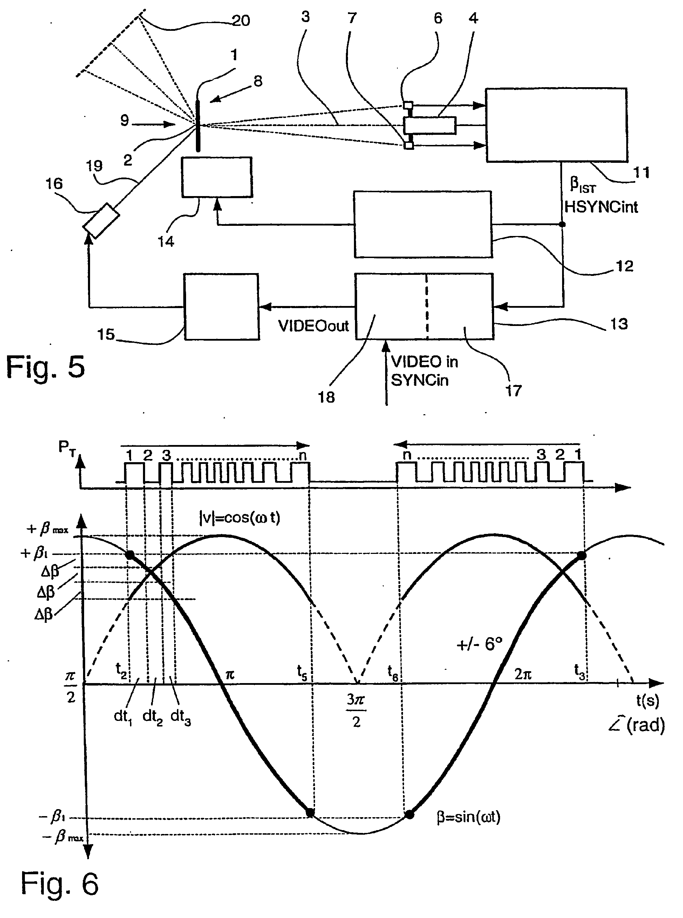

**Fig. 5** zeigt eine Anordnung mit einem resonant schwingenden Spiegel zur Zeilenablenkung in einem Videoprojektionssystem in einer vereinfachten Übersichtsdarstellung.

Die Anordnung besteht aus einem Regelkreis für einen Antrieb 14 des resonant schwingenden Spiegel 1 sowie einer Videosignalverarbeitung, die das elektrische Signal VIDEOin in ein optisches Signal eines Nutzlichtbündels 19 wandelt und der augenblicklichen Winkelstellung $\beta$ des Spiegels 1 zuordnet.

Der Phasenregelkreis bildet sich aus dem erfindungsgemäßen Messwertaufnehmer, bestehend aus der Laserdiode 4, den Fotodioden 6 und 7 und der Auswerteelektronik sowie aus einer Regeleinrichtung 12, einem Spiegelantrieb 14, der ersten Spiegelfläche des Spiegels 1 und dem reflektierten Meßstrahl 5.

Die Videosignalverarbeitung beinhaltet eine Videoelektronik 13, eine Treiberelektronik 15 und eine modulierbare Laserquelle 16.

Die Videoelektronik 13 ihrerseits besteht aus den Hauptbaugruppen Rechenschaltung 17 und Speicher 18.

Die Auswerteelektronik 11 des Messwertaufnehmers liefert aus den Zeitmessungen die augenblickliche Amplitude $\beta_{IST}$ und ein internes Synchronisiersignal HSYNCint für die Horizontalablenkung. Die Größe augenblickliche Amplitude $\beta_{ist}$ wird der Regeleinrichtung 12 zugeführt.

Das Signal HSYNCint wird der Rechenschaltung 17 der Videoelektronik 13 zugeführt.

Die Rechenschaltung 17 berechnet aus den Zeitmessungen $t_1$, $t_2$, $t_3$, ..... und mit dem vorliegen des sin-förmigen Bewegungsverhaltens des Spiegels für jeden Wert $d\beta$ den zugehörigen Wert $dt$.

Allgemein gesagt wird aus der Funktion des resonant betriebenen Spiegels $\beta = a^*\sin \omega t$ wird die Ableitung nach $t$ gebildet

$$v = \beta' = \frac{d\beta}{dt} = \frac{\bar{d\beta}}{a^*\cos\omega t}$$

der gesuchte Wert für $dt$ ist

$$dt = \frac{d\beta}{a^*\cos\omega t}.$$

Praktisch wird für $d\beta$ ein sinnvoller Wert $\Delta\beta$ festgelegt, z.B. beträgt der Winkel $\Delta\beta$ die Breite eines Pixel (oder eines Teiles davon) und der zugehörige Wert für $\Delta t$ wird berechnet. Die berechneten Werte At werden zum asynchronen Auslesen der in dem Speicher 18 zwischengespeicherten Videodaten VIDEOin verwendet.

Die mit einem Eingangssynchronisiersignal SYNCin in den Speicher 18 zeitlich linear eingelesenen und gespeicherten Videodaten VIDEOin werden von der Rechenschaltung 17 gesteuert, entsprechend den berechneten Werten Δt zeitlich nichtlinear ausgelesen und der Treiberelektronik 15 als Daten VIDEOout übergeben. Die Treiberelektronik 15 steuert die modulierbare Laserlichtquelle 16, welche das modulierte Nutzlichtbündel 19 auf die zweite Spiegelfläche 9 aussendet.

Infolge der sin-förmigen Spiegelbewegung und der zeitlich nichtlinearen Modulation wird eine geometrisch lineare Zeile mit einem abgelenkten Nutzlichtbündel 20 dargestellt. Somit wird das sin-förmige Verhalten des Spiegels mit der elektronischen Ansteuerung kompensiert.

**Fig. 6** zeigt in grafischer Darstellung die sin-förmige Bewegungsfunktion β = f(t), die cos-förmige Geschwindigkeitsfunktion |v| = f(t) und den der Geschwindigkeitsfunktion zugeordneten Pixeltakt $P_T$ = f(t).

Wie aus der Fig. 6 ersichtlich ist, verkleinert sich der Pixeltakt zunächst mit zunehmender Bildpunktnummer 1, 2, 3,.... bis zur Mitte der Zeile und steigt dann bis zum letzten Bildpunkt n der Zeile wieder an; der Pixeltakt ist proportional zur Geschwindigkeit des Spiegels. Wesentlich ist auch, daß der Speicher 18 so organisiert ist und die Videodaten so ausgelesen werden, daß in einer ersten Halbperiode die Bildpunkte einer ersten Zeile in der Reihenfolge 1, 2, 3, ....n-2, n-1, n und in einer zweiten Halbperiode die Bildpunkte einer folgenden Zeile in der Reihenfolge n, n-1, n-2 .......3, 2, 1 ausgelesen werden. Die dick dargestellten Kurvenstücke versinnbildlichen den Abschnitt für das Schreiben der Zeilen.

Je größer die Totzeit gewählt wird, desto geringer ist der Unterschied in der Geschwindigkeit des abgelenkten Nutzlichtbündels beim Schreiben einer Zeile und dem zufolge in der Helligkeit innerhalb der Zeile.

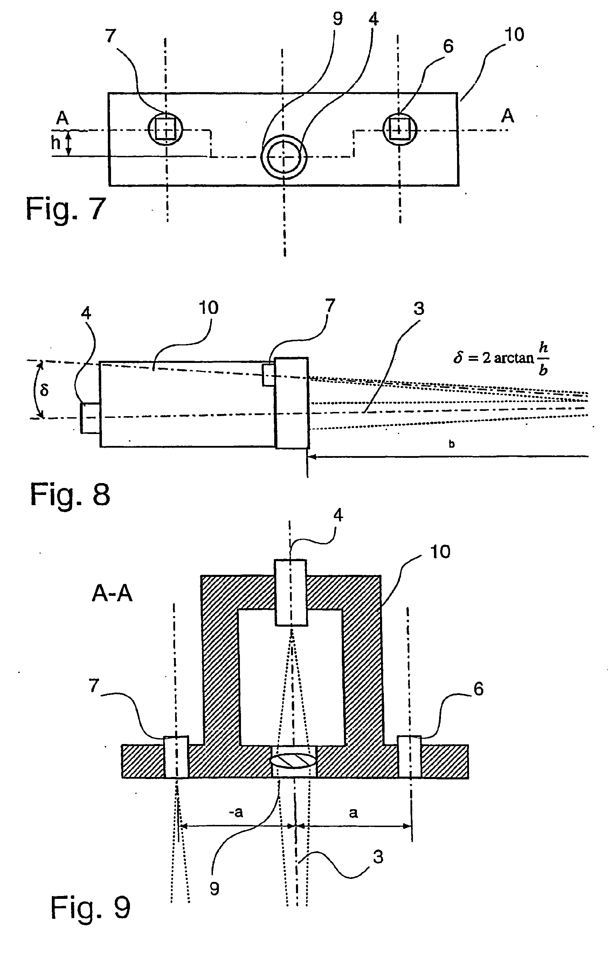

**Fig. 7** zeigt in einer Seitenansicht die Meßanordnung bestehend aus der Laserdiode 4 und den Fotodioden 6 und 7, die an einem Träger 10 befestigt sind. Die Fotodioden 6 und 7 liegen in einer Ebene, die Laserdiode liegt um den Betrag h versetzt zu dieser Ebene. Der Betrag h wird zweckmäßig so groß gewählt, dass das reflektierte Meßstrahl die Laserdiode nicht bestrahlt, um eine Beeinträchtigung des Betriebes der Laserdiode zu vermeiden.

**Fig. 8** zeigt eine andere Seitenansicht der Messanordnung. In dieser Darstellung ist ersichtlich, dass die Strahlrichtung des Meßstrahles unter dem kleinen Winkel δ/2 = arctan h/b auf die Spiegelfläche des Spiegels ausgerichtet ist, um die Strahlrichtung um den Betrag h zu versetzen.

**Fig. 9** zeigt eine Draufsicht der Meßanordnung im Schnitt A-A. Hier ist ersichtlich, dass im Strahlengang der Laserdiode eine Linse angeordnet ist, die das reflektierte Meßstrahl in eine Ebene fokussiert, in der die Fotodioden 6 und 7 angeordnet sind.

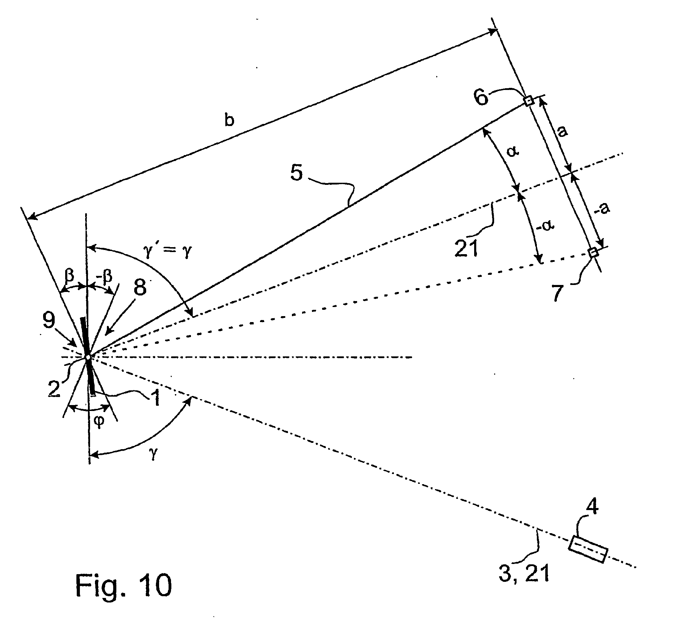

**Fig.10** zeigt eine Meßanordnung entsprechend der Fig. 3, bei welcher der Winkel γ zwischen der Strahlachse 21 des Meßstrahles 3 und der Ruhestellung der ersten Spiegelfläche 8 gleich 60° ist. Dementsprechend ist der Winkel γ' ebenfalls 60°. Die Fotoempfänger 6 und 7 sind hier ebenfalls symmetrisch zur Strahlachse 21 in einem Abstand a und in einem Abstand b von der Schwingachse 2 angeordnet. Bei dieser Anordnung kann kein Rückreflex in die Laserdiode 4 gelangen, auch wenn keine Schrägstellung der Strahlen erfolgt, der Winkel δ gleich Null ist (im Vergleich ist Fig. 8 der Winkel δ > 0 gezeigt). Durch die Schrägstellung von Laserdiode 4 und den Fotoempfänger 6 und 7 wird die Bautiefe der Anordnung verringert.

Bezugszeichenliste

| | |
|---|---|
| 1 | Spiegel |
| 2 | Schwingachse |
| 3 | Meßstrahl |
| 4 | Laserdiode |
| 5 | abgelenkter Meßstrahl |
| 6 | Fotoempfänger |
| 7 | Fotoempfänger |
| 8 | erste Spiegelfläche |
| 9 | zweite Spiegelfläche |
| 10 | Träger |
| 11 | Auswerteelektronik |
| 12 | Regeleinrichtung |
| 13 | Videoelektronik |
| 14 | Antriebseinheit |
| 15 | Treiberelektronik |
| 16 | modulierbare Laserquelle |
| 17 | Rechenschaltung |
| 18 | Speicher |

19 Nutzlichtbündel
20 abgelenktes Nutzlichtbündel
21 Strahlachse

**Patentansprüche**

1. Resonanzscanner, mit

   - einem resonanten Schwinger, der eine erste Spiegelfläche (8) und eine Antriebseinheit (14) hat, die die Spiegelfläche (8) um eine Schwingachse (2) in Schwingungen mit einer Periodendauer T auslenkt, und einer Meßanordnung zur Messung der Schwingungsamplitude des resonanten Schwinger, wobei die Meßanordnung
   - eine Lichtquelle (4), die gegenüberliegend der ersten Spiegelfläche (8) angeordnet ist und die einen Meßstrahl (3) auf die erste Spiegelfläche (8) entlang einer Strahlachse aussendet, wobei der Meßstrahl von der Spiegelfläche abgelenkt wird, die Strahlachse (21) die Schwingachse (2) schneidet und in einem Winkel ($\gamma$) zur unausgelenkten Spiegelfläche steht, und
   - einen ersten Fotoempfänger (6) aufweist, der gegenüberliegend der ersten Spiegelfläche (8) in einem Abstand a zur Strahlachse (21) und in einem Abstand b zur ersten Spiegelfläche (8) so angeordnet ist, daß er in einer Ebene liegt, die durch den Meßstrahl und den abgelenkten Meßstrahl (5) aufgespannt ist,
   **dadurch gekennzeichnet, daß**
   - der Fotoempfänger so angeordnet ist, daß in einer Halbwelle der Schwingung der abgelenkte Meßstrahl (5) innerhalb eines Viertels (0 .... T/4 bzw. 0 .... $\pi$/2) der Periode und innerhalb eines folgenden Viertels (T/4 .... T/2 bzw. $\pi$/2 .... $\pi$) dieser Periode den Fotoempfänger (6) überstreicht und daß der abgelenkte Meßstrahl (5) den Fotoempfänger trifft, wenn die Auslenkung des resonanten Schwingers weder bei maximaler Amplitude (n*2$\pi$+$\pi$/2; n = 0, 1, 2, 3,.....) noch im Nulldurchgang (n*$\pi$; n = 0, 1, 2, 3,.....) der Schwingungen liegt, so daß der Fotoempfänger (6) in den beiden Vierteln zweimal vom abgelenkten Meßstrahl (5) beleuchtet wird,
   - eine Auswerteelektronik (11) vorhanden ist, mit der der Fotoempfänger (6) verbunden ist, die in Abhängigkeit von der Beleuchtung des Fotoempfängers (6) impulse gewinnt, und die so ausgebildet ist, daß sie aus den Impulsen die Zeitpunkte (t1, t2) ermittelt, zu denen der abgelenkte Meßstrahl (5) auf den Fotoempfänger (6) trifft, aus den Zeitpunkten eine Zeitdauer $\Delta t = t_2 - t_1$ berechnet und einen Ist-Wert $\varphi_{IST}$ der maximalen Amplitude nach der Gleichung

$$\varphi_{IST} = \frac{\arctan\dfrac{a}{b}}{\sin\pi(\dfrac{1}{2} - \dfrac{\Delta t}{T})}$$

   berechnet, und
   - der resonante Schwinger eine zweite Spiegelfläche (9) zur Ablenkung eines Nutzlichtbündels hat, die der ersten Spiegelfläche (8) gegenüberliegend angeordnet ist.

2. Resonanzscanner nach Anspruch 1, **dadurch gekennzeichnet, daß** in der aufgespannten Ebene ein zweiter Fotoempfänger (7) symmetrisch zu dem ersten Fotoempfänger (6) bezogen auf die Strahlachse (21) des einfallenden Meßstrahls (3) angeordnet ist.

3. Resonanzscanner nach Anspruch 1, **dadurch gekennzeichnet, daß** die Auswerteelektronik (11) mit einer Regeleinrichtung (12) und diese mit einer Antriebseinheit (14) für den resonanten Schwinger verbunden ist.

4. Resonanzscanner nach Anspruch 1 oder nach Anspruch 3, **dadurch gekennzeichnet, daß** die Auswerteelektronik (11) mit einer Videoelektronik (13) mit Rechenschaltung (17) und Speicher (18), die Videoelektronik (13) mit einer Treiberelektronik (15) und diese mit einer modulierbaren Laserlichtquelle (16) verbunden ist.

5. Verfahren zum Resonanzscannen, bei dem

   a) ein resonanter Schwinger um eine Schwingachse in Schwingungen mit einer Periodendauer T ausgelenkt wird,

b) innerhalb einer Halbwelle der Schwingungen einer vorbestimmten Auslenkung ($\beta_1$) des Schwingers zwei zugeordnete Zeitpunkte (t1, t2) bestimmt werden, wobei die vorbestimmte Auslenkung weder bei maximaler Amplitude (n*$2\pi+\pi/2$; n = 0, 1, 2, 3,.....) noch im Nulldurchgang (n*$\pi$; n = 0, 1, 2, 3,.....) der Schwingungen liegt,

c) aus den Zeitpunkten ($t_1$, $t_2$) eine Zeitdauer $\Delta t = t_2 - t_1$ berechnet wird und

d) der Ist-Wert der maximalen Amplitude mit der Gleichung

$$\varphi_{IST} = \frac{2 \cdot \beta_1}{\sin \pi (\frac{1}{2} - \frac{\Delta t}{T})}$$

berechnet wird, wobei

e) am resonanten Schwinger eine erste Spiegelfläche zur Amplitudenmessung und eine zweite Spiegelfläche, die der ersten gegenüberliegt, zur Ablenkung eines Nutzlichtbündels verwendet wird.

6. Verfahren nach Anspruch 5, **dadurch gekennzeichnet, daß**

   - die Schritte b) und c) in einer folgenden Periode der Schwingung wiederholt werden, sowie
   - die Periode T aus der Zeitdifferenz zweier Zeitpunkte ($t_1$, $t_3$), die in zwei aufeinanderfolgenden Perioden der vorbestimmten Auslenkung ($\beta_1$) zugeordnet sind, gemäß der Gleichung T= $t_3$ - $t_1$ berechnet wird.

7. Verfahren nach Anspruch 5 oder nach Anspruch 6, **dadurch gekennzeichnet, daß** der Ist-Wert der Amplitude einer Regeleinrichtung (12) zur Einstellung eines Soll-Wertes der Amplitude des resonanten Schwingers zugeführt wird und von der Regeleinrichtung eine Stellgröße an die Antriebseinheit (14) geliefert wird.

8. Verfahren nach Anspruch 5, **dadurch gekennzeichnet, daß** der Winkel 2·$\beta_1$ so bemessen wird, daß die Zeitdauer $\Delta$t, die errechnet wird, einer Zeilentotzeit beim Schreiben aufeinanderfolgender Zeilen eines Videobildes entspricht.


**Claims**

1. Resonant scanner, comprising

   - a resonant oscillator having a first mirror surface (8) and a drive unit (14) driving the mirror surface (8) into an oscillation with a period T about an oscillatory axis (2), and a measurement arrangement for measuring the oscillation amplitude of the resonant oscillator, wherein the measurement arrangement comprises
   - a light source (4) which is arranged opposing the first mirror surface (8) and which emits a measuring beam (3) onto the first mirror surface (8), wherein the measuring beam is reflected by the mirror surface, and a beam axis (21) of the measuring beam (3) intersects the oscillatory axis (2) and extends at an angle ($\gamma$) relative to a resting position of the first mirror surface (8) of the resonant oscillator, and
   - a first photoreceiver (6), which is arranged opposing the first mirror surface (8) at a distance a from the beam axis (21) of the measuring beam (3) and at a distance b from the first mirror surface (8) in such a manner that the photoreceiver is located within a plane which is defined by the measuring beam (3) and a deflected measuring beam (5),
   **characterized in that**
   - the photoreceiver is located such, that in one half cycle of the oscillation the deflected measuring beam (5) moves over the photoreceiver (6) within a quadrant (0 ... T/4 or 0 ... $\pi$/2) of the period of the oscillation and within a subsequent quadrant (T/4 ... T/2 or $\pi$/2 .... $\pi$) of this period, and that the deflected measuring beam (5) hits the photoreceiver, when the deflection of the resonant oscillator is neither the maximum amplitude (n*$2\pi+\pi/2$; n = 0, 1, 2, 3,.....) of the oscillation nor the zero crossing (n*$\pi$; n = 0, 1, 2, 3,.....) of the oscillation, whereby the photoreceiver (6) is illuminated twice by the deflected measuring beam (5) in the two quadrants,
   - an evaluation electronics (11) is provided to which the photoreceiver (6) is connected, which evaluation electronics generates pulses as a function of the photoreceiver being illuminated, and which is adapted to determine from the pulses of the photoreceiver (6) the points in time ($t_1$, $t_2$) at which the deflected measuring beam (5) hits the photoreceiver (6) and to compute from the points in time a time interval $\Delta t = t_2 - t_1$, and an actual value $\varphi_{IST}$ of the maximum amplitude according to the equation

$$\varphi_{IST} = \frac{\arctan\dfrac{a}{b}}{\sin\pi(\dfrac{1}{2} - \dfrac{\Delta t}{T})}$$

and

- the resonant oscillator has a second mirror surface (9) arranged opposite the first mirror surface (8) for deflection of a useful light beam.

2. The resonant scanner as claimed in claim 1, **characterized in that** in the defined plane a second photoreceiver (7) is arranged symmetrically to the first photoreceiver (6), relative to the beam axis (21) of the measuring beam (3).

3. The resonant scanner as claimed in claim 1, **characterized in that** the evaluation electronics (11) is connected to a closed-loop control means (12), which is in turn connected to a drive unit (14) for the resonant oscillator.

4. The resonant scanner as claimed in claim 1 or in claim 3, **characterized in that** the evaluation electronics (11) is connected to video electronics (13) comprising a computing circuit (17) and a memory (18), said video electronics (13) being connected to drive electronics (15), which is in turn connected to a modulable laser light source (16).

5. A method for resonant scanning, wherein

   a) a resonant oscillator is driven into oscillations with a period T about an oscillatory axis,
   b) within a half cycle of the oscillation two points in time (t1, t2) are determined for a predetermined deflection ($\beta_1$) of the oscillator, said predetermined deflection being neither maximum amplitude ($n*2\pi+\pi/2$; n = 0, 1, 2, 3,.....) nor zero crossing ($n*\pi$; n = 0, 1, 2, 3,.....) of the oscillations,
   c) a time interval $\Delta t = t_2 - t_1$ is computed from the points in time ($t_1, t_2$), and
   d) the actual value of the maximum amplitude is computed according to the equation

$$\varphi_{IST} = \frac{2\beta_1}{\sin\pi(\dfrac{1}{2} - \dfrac{\Delta t}{T})}$$

   wherein
   e) a first mirror surface of the resonant scanner is used for amplitude measurement and a second surface which is located opposite the first surface is used for deflecting a useful light beam.

6. The method as claimed in claim 5, **characterized in that**

   - the steps b) and c) are repeated in a subsequent period of the oscillation, and
   - the period T is computed as $T = t_3 - t_1$ on the basis of the time difference between two points in time ($t_1, t_3$) which are measured in two subsequent periods at the predetermined deflection ($\beta_1$).

7. The method as claimed in claim 5 or in claim 6, **characterized in that** the instantaneous value of the amplitude is supplied to a closed-loop control means (12) for adjusting a desired value of the amplitude of the resonant oscillator and a controller output is furnished to the drive unit (14) by the closed-loop control means.

8. The method as claimed in claim 5, **characterized in that** the angle $2\beta_1$ is dimensioned such that the time $\Delta t$, which is computed, corresponds to a line blanking interval during writing of subsequent lines of a video image.

**Revendications**

1. Scanner à résonance, comprenant :

   - un oscillateur résonant présentant une première surface de miroir (8) et une unité d'entraînement (14) qui fait dévier la surface de miroir (8) autour d'un axe d'oscillation (2) par des oscillations d'une durée de période T, et un ensemble de mesure pour mesurer l'amplitude d'oscillation de l'oscillateur résonant, dans lequel l'ensemble de mesure présente

- une source de lumière (4) qui est disposée à l'opposé de la première surface de miroir (8) et qui émet un rayon de mesure (3) sur la première surface de miroir (8) suivant un axe de rayon, dans lequel le rayon de mesure est dévié de la surface de miroir, l'axe de rayon (21) coupe l'axe d'oscillation (2) et se trouve sous un angle ($\gamma$) par rapport à la surface de miroir non déviée, et

- un premier photorécepteur (6) qui est disposé à l'opposé de la première surface de miroir (8) à une distance a de l'axe de rayon (21) et à une distance b de la première surface de miroir (8), de telle sorte qu'il se trouve dans un plan fixé par le rayon de mesure et le rayon de mesure dévié (5),

**caractérisé en ce que**

- le photorécepteur est disposé de telle sorte que sur une demi-onde de l'oscillation, le rayon de mesure dévié (5) balaie le photorécepteur (6) en un quart (0 ... T/4 ou 0 ... $\pi$/2) de la période et en un quart suivant (T/2 ou $\pi$/2 ... $\pi$) de cette période, et **en ce que** le rayon de mesure dévié (5) atteint le photorécepteur lorsque la déviation de l'oscillateur résonant ne se trouve ni à l'amplitude maximale (n*2$\pi$+$\pi$/2 ; n = 0, 1, 2, 3, ...) ni au passage par zéro (n*$\pi$ ; n = 0, 1, 2, 3, ...) des oscillations de sorte que le photorécepteur (6) est illuminé deux fois par le rayon de mesure dévié (5) dans les deux quarts,

- il existe une électronique d'évaluation (11) à laquelle est relié le photorécepteur (6) qui acquiert des impulsions en fonction de l'illumination du photorécepteur (6), et qui est réalisée de telle sorte qu'elle détermine à partir des impulsions les instants (t1, t2) auxquels le rayon de mesure dévié (5) atteint le photorécepteur (6), calcule une durée $\Delta t = t_2 - t_1$ à partir des instants et calcule une valeur réelle $\varphi_{IST}$ de l'amplitude maximale selon l'équation

$$\varphi_{IST} = \frac{\arctan \dfrac{a}{b}}{\sin \pi \left( \dfrac{1}{2} - \dfrac{\Delta t}{T} \right)} \, ,$$

et

- l'oscillateur résonant présente une deuxième surface de miroir (9) pour dévier un faisceau de lumière utile qui est disposé à l'opposé de la première surface de miroir (8).

2. Scanner à résonance selon la revendication 1, **caractérisé en ce que** sur le plan fixé, un deuxième photorécepteur (7) est disposé de façon symétrique au premier photorécepteur (6) par rapport à l'axe de rayon (21) du rayon de mesure (3) incident.

3. Scanner à résonance selon la revendication 1, **caractérisé en ce que** l'électronique d'évaluation (11) est reliée à un dispositif de régulation (12) et celui-ci est relié à une unité d'entraînement (14) pour l'oscillateur résonant.

4. Scanner à résonance selon la revendication 1 ou 3, **caractérisé en ce que** l'électronique d'évaluation (11) est reliée à une électronique vidéo (13) avec un circuit de calcul (17) et une mémoire (18), l'électronique vidéo (13) étant reliée à une électronique d'excitation (15) et celle-ci étant reliée à une source de lumière laser (16) modulable.

5. Procédé de balayage de résonance, dans lequel

a) un oscillateur résonant est dévié autour d'un axe d'oscillation par des oscillations d'une durée de période T,
b) sur une demi-onde des oscillations d'une déviation prédéterminée ($\beta_1$) de l'oscillateur, deux instants associés (t1, t2) sont déterminés, dans lequel la déviation prédéterminée se trouve ni à l'amplitude maximale (n*2$\pi$+$\pi$/2 ; n = 0, 1, 2, 3, ...) ni au passage par zéro (n*$\pi$ ; n = 0, 1, 2, 3, ...) des oscillations,
c) une durée $\Delta t = t_2 - t_1$ est calculée à partir des instants (t$_1$, t$_2$), et

- la valeur réelle de l'amplitude maximale est calculée par l'équation

$$\varphi_{IST} = \frac{2 \cdot \beta_1}{\sin \pi \left( \frac{1}{2} - \frac{\Delta t}{T} \right)},$$

dans lequel

e) au niveau de l'oscillateur résonant, une première surface de miroir est utilisée pour la mesure d'amplitude et une deuxième surface de miroir opposée à la première est utilisée pour dévier un faisceau de lumière utile.

6. Procédé selon la revendication 5, **caractérisé en ce que**

   - les étapes b) et c) sont répétées dans une période suivante de l'oscillation, ainsi que
   - la période T est calculée à partir de la différence de temps entre deux instants ($t_1$, $t_2$) qui sont attribués à deux périodes successives de la déviation prédéterminée ($\beta_1$), selon l'équation T = $t_2$ - $t_1$.

7. Procédé selon la revendication 5 ou 6, **caractérisé en ce que** la valeur réelle de l'amplitude est amenée à un dispositif de régulation (12) pour régler une valeur de consigne de l'amplitude de l'oscillateur résonant et une variable de régulation est fournie par le dispositif de régulation à l'unité d'entraînement (14).

8. Procédé selon la revendication 5, **caractérisé en ce que** l'angle $2 \cdot \beta_1$ est dimensionné de telle sorte que la durée $\Delta_t$ calculée correspond à un temps mort de ligne lors de l'écriture des lignes successives d'une image vidéo.

Fig. 1

Fig. 2

Fig. 3

Fig. 4

Fig. 5

Fig. 6

Fig. 7

$$\delta = 2\arctan\frac{h}{b}$$

Fig. 8

A-A

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5121138 A1
- DE 10002196 A1
- WO 9813719 A1
- DE 19709913 C2
- US 3609485 A
- US 3642344 A
- US 4044283 A
- EP 0214863 A
- US 5347124 A
- DE 3726500 A

**In der Beschreibung aufgeführte Nicht-Patentliteratur**

- **Reich, Stan.** The use of Elektro-Mechanical Mirror Scanning Devises. *SPIE Vol. 86 Laser Scanning Components & Techniques,* 1976, vol. 86, 47-58